# EUROPEAN PATENT APPLICATION

(11) **EP 3 530 152 A1**
(43) Date of publication of application: **28.08.2019**
(21) Application number: 19157983.8
(22) Date of filing: 19.02.2019
(51) Int. Cl.: A47J 27/21

(54) **POUR-OVER KETTLE**

(30) Priority: 27.02.2018 TW 107202651 U
(71) Applicant: Aurlia Corporation, New Taipei City (TW)
(72) Inventor: LIN, Jung-Kuo, New Taipei City (TW)
(74) Representative: Boco IP Oy Ab

(57) **Abstract**

A pour-over kettle has a ceramic vessel (10, 10A) and a metal outlet connector (20, 20A). The metal outlet connector (20, 20A) is detachably mounted to a water outlet (16, 16A) of the ceramic vessel (10, 10A) and may be formed as a spout or a plug. Water stored in the ceramic vessel (10, 10A) has better taste and can be kept at temperatures that are good for brewing coffee or tea. The metal outlet connector (20, 20A) is hard in material and is not fractured easily. It is convenient to clean an inside of the metal outlet connector (20) and to store or transport the pour-over kettle. The spout-like metal outlet connector (20) can be replaced by the other spout-like metal outlet connectors (20) with different calibers or by the plug-like metal outlet connector (20A).

## Description

This application is based upon and claims priority under 35 U.S.C. 119 from Taiwan Patent Application No. 107202651 filed on February 27, 2018, which is hereby specifically incorporated herein by this reference thereto.

### 1. Field of the Invention

The present invention relates to a kettle, especially to a pour-over kettle for brewing coffee or tea.

### 2. Description of the Prior Art(s)

Coffee and tea are common and popular drinks nowadays. People can refresh themselves by drinking coffee or tea, which is a great enjoyment of life. Speaking of making a cup of coffee, there are four factors in determining quality of the cup of coffee: coffee beans, and quality, temperature and quantity of water for brewing the coffee beans. Among these factors, the quality of water is very important. As the water is the main ingredient of coffee, the water with good quality can brew coffee with unique flavor.

A conventional pour-over kettle is wholly made of ceramic or metal and has a vessel, a spout, and a handle that are integrally formed as a single part. The ceramic is a better thermal insulation material than the metal. Moreover, water stored in the pour-over kettle that is made of ceramic can have better taste than the water stored in the pour-over kettle that is made of metal. However, since spout of the conventional pour-over kettle is elongated and slender, the spout of the conventional pour-over kettle that is made of ceramic is fractured easily. In addition, as the spout is integrally formed on the vessel and is long and slender, it is hard to clean an inside of the spout and is also impossible to replace the spouts with different calibers according to users' needs.

The main objective of the present invention is to provide a pour-over kettle that has a ceramic vessel and a metal outlet connector. The ceramic vessel has a containing room defined inside the ceramic vessel, a water outlet communicating with the containing room, and an upper opening communicating with the containing room. The metal outlet connector is detachably mounted to the water outlet of the ceramic vessel and may be formed as a spout or a plug.

Water stored in the ceramic vessel can have better taste than the water stored in a metal vessel. Moreover, thermal conductivity of the ceramic vessel is lower than that of the metal vessel, such that the ceramic vessel can keep the hot water in the ceramic vessel at temperatures that are good for brewing coffee or tea. Accordingly, coffee or tea that is brewed by the hot water poured from the ceramic vessel of the pour-over kettle can have good taste.

Furthermore, the spout-like metal outlet connector is hard in material and is not fractured easily due to an elongated and slender structure. As the spout-like metal outlet connector is detachable from the ceramic vessel, it is convenient to clean an inside of the metal outlet connector and to store or transport the pour-over kettle. In addition, the spout-like metal outlet connector can be replaced by the other spout-like metal outlet connectors with different calibers or by the plug-like metal outlet connector.

### IN THE DRAWINGS:

Fig. 1 is a perspective view of a first embodiment of a pour-over kettle in accordance with the present invention;
Fig. 2 is a cross-sectional side view of the pour-over kettle in Fig. 1;
Fig. 3 is an exploded perspective view of the pour-over kettle in Fig. 1;
Fig. 4 is a perspective view of a second embodiment of a pour-over kettle in accordance with the present invention;
Fig. 5 is a cross-sectional side view of the pour-over kettle in Fig. 4;
Fig. 6 is a perspective view of a third embodiment of a pour-over kettle in accordance with the present invention;
Fig. 7 is a perspective view of a metal outlet connector of the pour-over kettle in Figs. 1 and 4; and
Fig. 8 is a perspective view of another metal outlet connector of the pour-over kettle in Fig. 6.

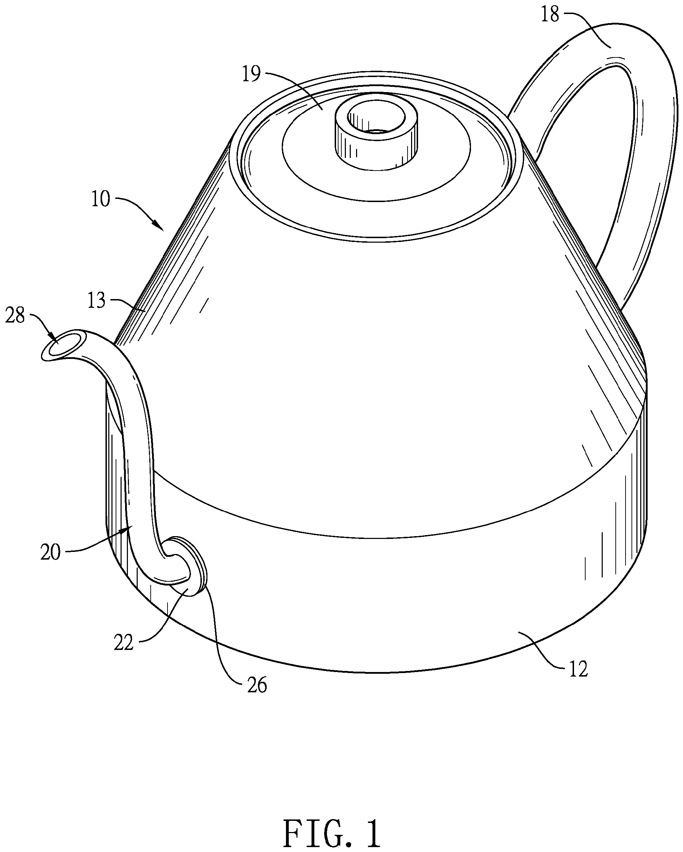

With reference to Fig. 1, a pour-over kettle in accordance with the present invention comprises a ceramic vessel 10, a handle 18, and a metal outlet connector 20.

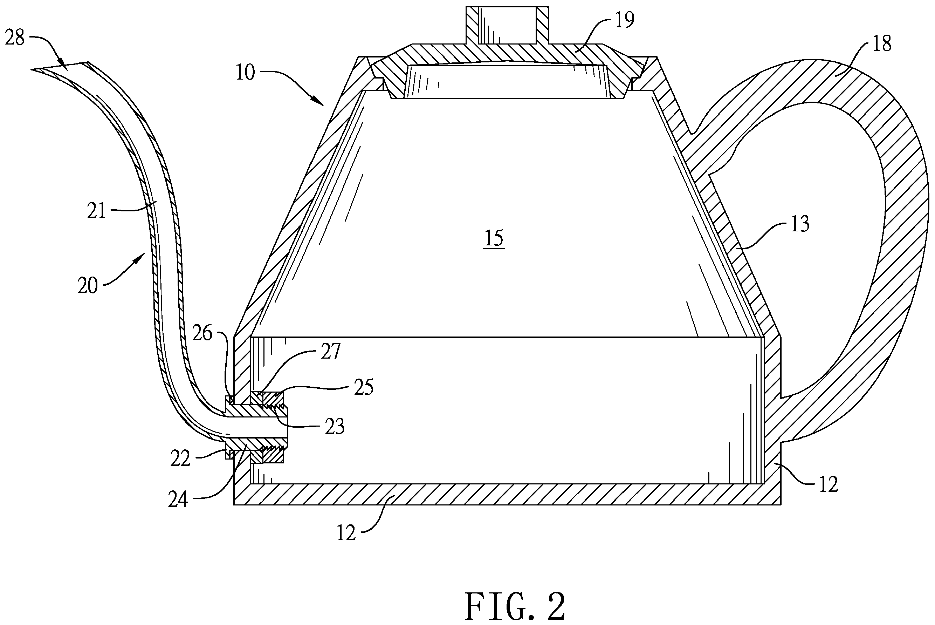

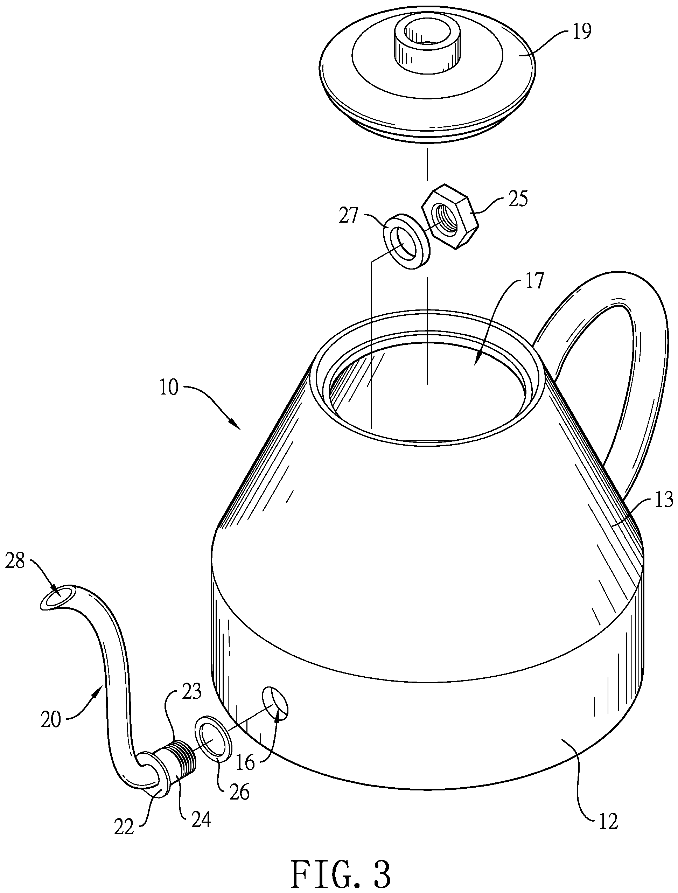

With further reference to Figs. 2 and 3, the ceramic vessel 10 has a bottom 11, a side wall, a containing room 15, a water outlet 16, and an upper opening 17.

The bottom wall 11 has a peripheral edge. In the first preferred embodiment, the bottom wall 11 is circular. However, a shape of the bottom wall 11 is not limited to circular and may be other geometric shapes.

The side wall extends up from the peripheral edge of the bottom 11. In the first preferred embodiment, the side wall includes a lower wall 12 and an upper wall 13. The lower wall 12 perpendicularly extends up from the peripheral edge of the bottom wall 11 and has an upper annular edge. The upper wall 13 further extends up from the upper annular edge of the lower wall 12 and tapers off upwardly. Thus, a bottom portion of the ceramic vessel 10 is wider than a top portion of the ceramic vessel 10. When pouring water out of the pour-over kettle, the pour-over kettle can keep stable to allow a user to regulate water output from the pour-over kettle.

The containing room 15 is defined inside the ceramic vessel 10 and is surrounded by the bottom 11 and the side wall. The water outlet 16 is formed through the side wall and communicates with the containing room 15. The upper opening 17 is defined through a top of the ceramic vessel 10 and communicates with the containing room 15. In the first preferred embodiment, the water outlet 16 is formed through the lower wall 12 of the side wall and the upper opening 17 is surrounded by an upper annular edge of the upper wall 13 of the side wall. A user is capable of adding hot water into the containing room 15 of the ceramic vessel 10 through the upper opening 17.

The handle 18 is attached to the side wall of the ceramic vessel 10 and is disposed opposite to the water outlet 16. Specifically, two ends of the handle 18 are attached to the upper wall 12 and the lower wall 13 respectively. The user is capable of lifting the pour-over kettle by holding the handle 18.

The metal outlet connector 20 is detachably mounted to the water outlet 16 of the ceramic vessel 10 and has a connecting end, a flange 22, a connecting portion 23, and a mounting portion 24.

The connecting end of the metal outlet connector 20 is mounted through the water outlet 16 of the ceramic vessel 10. The flange 22 is formed around the connecting end of the metal outlet connector 20 and abuts on an outer surface of the side wall of the ceramic vessel 10, so as to close the water outlet 16 and to prevent the hot water from flowing out of the ceramic vessel 10 through the water outlet 16.

The connecting portion 23 is formed on the connecting end of the metal outlet connector 20 and protrudes in the containing room 15 of the ceramic vessel 10. The mounting portion 24 is formed on the connecting end of the metal outlet connector 20 and is disposed between the flange 22 and the connecting portion 23. The mounting portion 24 abuts on and is detachably attached to a hole edge defined around the water outlet 16.

A connecting element 25 is disposed in the containing room 15 of the ceramic vessel 10, and is mounted around and is securely connected with the connecting portion 23 of the metal connector 20. Thus, the side wall of the ceramic vessel 10 is held between the flange 22 and the connecting element 25.

Preferably, an outer sealing element 26 is mounted around the connecting end of the metal outlet connector 20 and is held between the flange 22 and the outer surface of the side wall of the ceramic vessel 10, so as to further prevent leakage between the flange 22 and the ceramic vessel 10. Moreover, an inner sealing element 27 is mounted around the connecting end of the metal outlet connector 20 and is held between the connecting element 25 and an inner surface of the side wall of the ceramic vessel 10, so as to enhance connection between the ceramic vessel 10 and the metal outlet connector 20. Specifically, the outer sealing element 26 and the inner sealing element 27 are elastomeric gasket.

Preferably, the connecting portion 23 of the metal outlet connector 20 is threaded and the connecting element 25 is a nut with an internal thread engaging with the connecting portion 23. Thus, the metal outlet connector 20 is detachably mounted to the water outlet 16 of the ceramic vessel 10.

As shown in Figs. 1 to 3 and 7, in the first preferred embodiment, the metal outlet connector 20 is formed as a spout, is elongated and curved, and has an outlet end 28 and a flow channel 21. The outlet end 28 and the connecting end of the metal outlet connector 20 are formed as two opposite ends of the spout-like metal outlet connector 20. The flow channel 21 is formed in the metal outlet connector 20 and through the outlet end 28 and the connecting end of the metal outlet connector 20. Preferably, the outlet end 28 is formed by slant cut. Thus, a cross-section of the outlet end 28 is oval. The slant cut outlet end 28 allows the hot water to slowly flow along the flow channel 21 and to gently flow out, so as to prevent pouring too much water all of a sudden.

In the first preferred embodiment, the pour-over kettle further comprises a lid 19. The lid 19 is detachably mounted on the top of the ceramic vessel 10 and covers the upper opening 17 of the ceramic vessel 10 to keep the hot water in the ceramic vessel 10 warm.

When brewing coffee, it is very important to control quantity of the hot water. By controlling the quantity of the hot water that is poured onto a filter paper with ground coffee, the time that the hot water stays on the filter paper and extracts ingredients from the ground coffee. If the extraction time is short, the brewed coffee will be watery and with light coffee flavor. If the extraction time is long, the brewed coffee will be tasted bitter and sour and unacceptable to normal people. The curved spout-like metal outlet connector 20 and the ceramic vessel 10 having the bottom portion wider than the top portion allow the user to regulate the water output from the pour-over kettle, so as to brew a cup of coffee with good flavor.

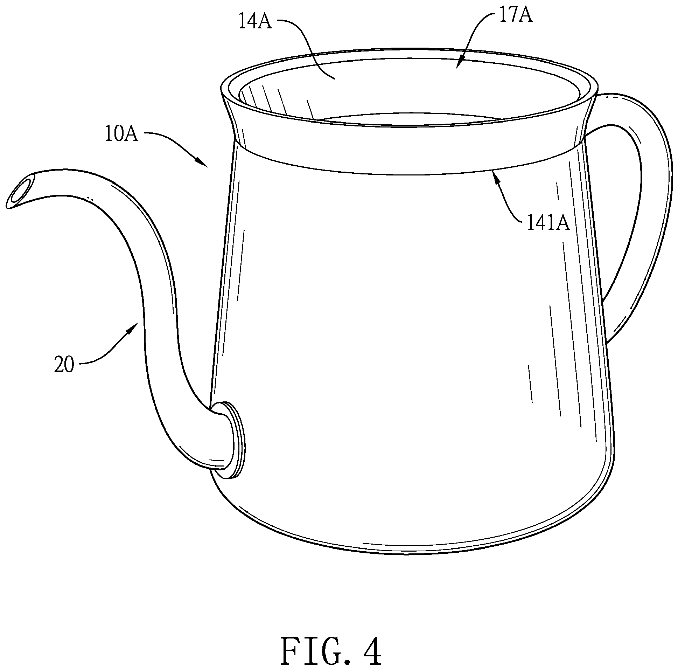

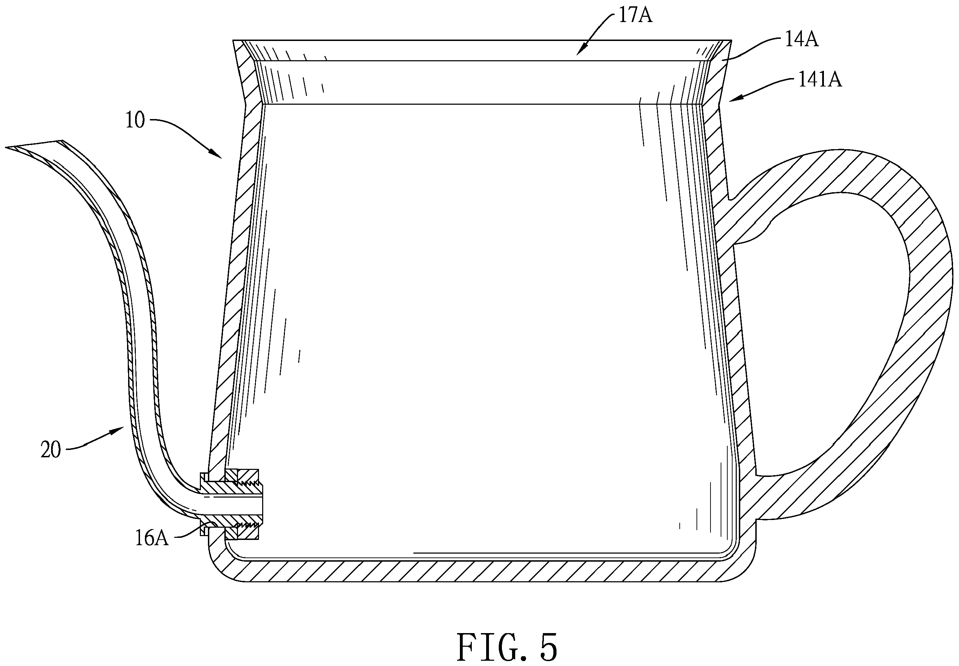

With further reference to Figs. 4 and 5, in the second preferred embodiment, the side wall of the ceramic vessel 10A tapers off upwardly. The ceramic vessel 10A further has a collar portion 14A and a neck portion 141A. The color portion 14A extends up from the side wall of the ceramic vessel 10A and is formed around the upper opening 17A. The neck portion 141A is formed around and is disposed between the side wall and the collar portion 14A of the ceramic vessel 10A.

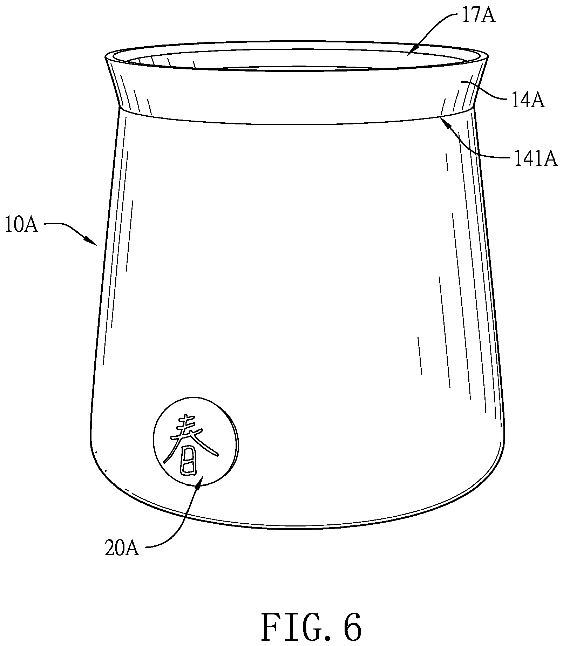

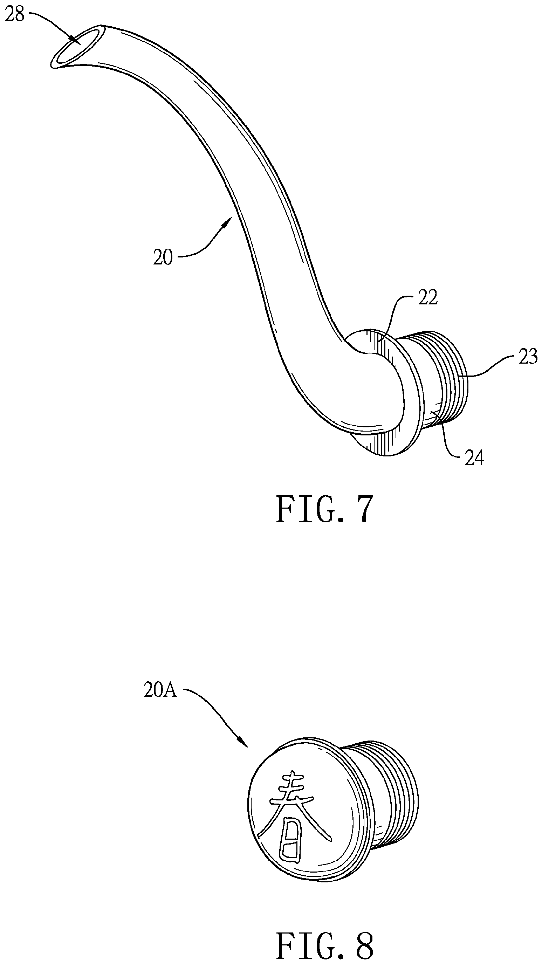

With further reference to Figs. 6 and 8, for another preferred embodiment of the metal outlet connector 20A, the metal outlet connector 20A is formed as a plug and seals the water outlet 16A of the ceramic vessel 10. When the plug-like metal outlet connector 20A is mounted to the water outlet 16A of the ceramic vessel 10A, the pour-over kettle becomes a cup for the user to drink water from the upper opening 17A of the ceramic vessel 10A directly.

The pour-over kettle as described has the following advantages. The water stored in the ceramic vessel 10, 10A can have better taste than the water stored in a metal vessel. Moreover, thermal conductivity of the ceramic vessel 10, 10A is lower than that of the metal vessel, such that the ceramic vessel 10, 10A can keep the hot water in the ceramic vessel 10, 10A at temperatures that are good for extraction. Accordingly, the coffee or tea that is brewed by the hot water poured from the ceramic vessel 10, 10A of the pour-over kettle can have good taste.

Furthermore, in addition to control the quantity of the hot water that is poured out of the pour-over kettle, the spout-like metal outlet connector 20 is hard in material and is not fractured easily due to an elongated and slender structure. As the spout-like metal outlet connector 20 is detachable from the ceramic vessel 10, 10A, the metal outlet connector 20 can be detached from the ceramic vessel 10, 10A for the convenience of cleaning the flow channel 21. Moreover, when storing or transporting the pour-over kettle, the metal outlet connector 20 also can be detached from the ceramic vessel 10, 10A, so as to reduce a room occupied by the whole pour-over kettle. In addition, the spout-like metal outlet connector 20 can be replaced by the other spout-like metal outlet connectors 20 with different calibers, such that velocity of the hot water that is poured out of the pour-over kettle can be regulated. When the spout-like metal outlet connector 20 is replaced by the plug-like metal outlet connector 20A, the pour-over kettle becomes a cup that allows the user to drink therefrom directly.

## Claims

1. A pour-over kettle comprising a ceramic vessel (10, 10A) having a containing room (15) defined inside the ceramic vessel (10, 10A) and an upper opening (17, 17A) communicating with the containing room (15), and the pour-over kettle **characterized in that**:
the ceramic vessel (10, 10A) has a water outlet (16, 16A) communicating with the containing room (15); and
the pour-over kettle comprises a metal outlet connector (20, 20A) detachably mounted to the water outlet (16, 16A) of the ceramic vessel (10, 10A).

2. The pour-over kettle as claimed in claim 1, wherein the metal outlet connector has
a connecting end mounted through the water outlet (16, 16A) of the ceramic vessel (10, 10A); and
a mounting portion (24) formed on the connecting end of the metal outlet connector (20, 20A), and abutting on and detachably attached to a hole edge defined around the water outlet (16, 16A).

3. The pour-over kettle as claimed in claim 2, wherein
the metal outlet connector (20, 20A) has
a flange (22) formed around the connecting end of the metal outlet connector (20, 20A) and abutting on the ceramic vessel (10, 10A); and
a connecting portion (23) formed on the connecting end of the metal outlet connector (20, 20A) and protruding in the containing room (15) of the ceramic vessel (10, 10A);
the mounting portion (24) of the metal outlet connector (20, 20A) is disposed between the flange (22) and the connecting portion (23); and
a connecting element (25) is mounted around and is securely connected with the connecting portion (23) of the metal connector (20, 20A), wherein the ceramic vessel (10, 10A) is held between the flange (22) and the connecting element (25).

4. The pour-over kettle as claimed in claim 3, wherein
the connecting portion (23) of the metal outlet connector (20, 20A) is threaded; and
the connecting element (25) is a nut with an internal thread engaging with the connecting portion (23).

5. The pour-over kettle as claimed in claim 3 or 4, wherein
an outer sealing element (26) is mounted around the connecting end of the metal outlet connector (20, 20A) and is held between the flange (22) and the ceramic vessel (10, 10A); and
an inner sealing element (27) is mounted around the connecting end of the metal outlet connector (20, 20A) and is held between the connecting element (25) and the ceramic vessel (10, 10A).

6. The pour-over kettle as claimed in claim 3 or 4, wherein the metal outlet connector (20) is formed as a spout, is elongated and curved, and has
an outlet end (28), and the outlet end (28) and the connecting end of the metal outlet connector (20) are formed as two opposite ends of the metal outlet connector (20); and
a flow channel (21) formed in the metal outlet connector (20) and through the outlet end (28) and the connecting end of the metal outlet connector (20).

7. The pour-over kettle as claimed in claim 3 or 4, wherein the metal outlet connector (20A) is formed as a plug and seals the water outlet (16A) of the ceramic vessel (10).

8. The pour-over kettle as claimed in claim 6 or 7, wherein the ceramic vessel (10) has a bottom (11); and
a side wall extending up from a peripheral edge of the bottom (11) and including
a lower wall (12) perpendicularly extending up from the peripheral edge of the bottom wall (11); and
an upper wall (13) extending up from an upper annular edge of the lower wall (12) and tapering off upwardly.

9. The pour-over kettle as claimed in claim 6 or 7, wherein
the ceramic vessel (10A) has
a bottom (11); and
a side wall tapering off upwardly; and
the ceramic vessel (10A) further has
a collar portion (14A) extending up from the side wall of the ceramic vessel (10A) and formed around the upper opening (17A); and
a neck portion (141A) formed around and disposed between the side wall and the collar portion (14A) of the ceramic vessel (10A).

10. The pour-over kettle as claimed in claim 8 or 9 further comprising a lid (19), and the lid (19) detachably mounted on a top of the ceramic vessel (10) and covering the upper opening (17) of the ceramic vessel (10).

11. The pour-over kettle as claimed in claim 8 or 9 further comprising a handle (18), and the handle (18) attached to the ceramic vessel (10) and disposed opposite to the water outlet (16).
